# EUROPÄISCHE PATENTANMELDUNG

(11) **EP 4 002 655 A1**
(43) Veröffentlichungstag der Anmeldung: **25.05.2022**
(21) Anmeldenummer: 20209484.3
(22) Anmeldetag: 24.11.2020
(51) Int. Cl.: H02K 7/102, H02K 9/06, H02K 11/33

(54) **ELEKTROMOTOR UND ROBOTER MIT ELEKTROMOTOR**

(71) Anmelder: Siemens Aktiengesellschaft, 80333 München (DE)
(72) Erfinder: Vollmer, Rolf, 36129 Gersfeld (DE); Zisler, Michael, 97717 Euerdorf-Wirmsthal (DE)

(57) **Zusammenfassung**

Die Erfindung betrifft einen Elektromotor (1), umfassend einen Stator (2) mit Wicklungen, welche eine erste Wickelkopfseite (2a) und eine zweite Wickelkopfseite (2b) umfassen, einen Rotor (3) mit einer Welle (4),
ein ein erstes Lagerschild (A) und ein zweites Lagerschild (B) aufweisendes Gehäuse (5),
ein im Inneren des Gehäuses (5) axial zur Welle (4) angeordnetes Laufrad (R), welches ausgestaltet ist einen Unterdruck (P1) zu erzeugen,
wobei in dem Gehäuse (5) eine Ansaugöffnung (6) derart zwischen dem ersten Lagerschild (A) und der ersten Kühlkopfseite (2a) des Stators (2) angeordnet ist, dass ein Kühlmedium (L) von außerhalb des Gehäuses (5) aufgrund des Unterdrucks (P1) an der ersten Wickelkopfseite (2a) vorbei in einen Luftspalt (8) zwischen dem Stator (2) und dem Rotor (3) strömt, weiterhin ist in dem Gehäuse (5) eine Ausblasöffnung (7) derart angeordnet, dass das Kühlmedium (L) aus dem Luftspalt (8) heraus an der zweiten Wickelkopfseite (2b) vorbei aus dem Gehäuse (5) ausströmt.

## Beschreibung

Die Erfindung betrifft einen Elektromotor mit einem Stator mit Wicklungen, welche eine erste Wickelkopfseite und eine zweite Wickelkopfseite umfassen, einen Rotor mit einer Welle, ein ein erstes Lagerschild und ein zweites Lagerschild aufweisendes Gehäuse, ein im Inneren des Gehäuses axial zur Welle angeordnetes Laufrad, welches ausgestaltet ist einen Unterdruck zu erzeugen.

Auch betrifft die Erfindung einen Roboter mit einem Elektromotor.

Es sind Elektromotoren bekannt, die an einem axialen Ende eine mechanische Last antreiben und an ihrem anderen Ende Lüfter und/oder Bremsen aufweisen.

Aus der EP 0 854 560 A1 ist ein Entwärmungskonzept für ein elektrisches Antriebssystem bekannt.

Auch sind Lüfterhauben bekannt, die mit Schrauben an einem Lagerschild des Elektromotors befestigt sind. Aus der EP 0 942 513 A2 und der EP 1 472 773 B1 sind Elektromotoren mit Lüftungskühlung bekannt.

All den bekannten Elektromotoren und Anordnungen zum Kühlen ist es gemein, dass die Bauformen für den Einsatz in Robotern zu groß sind.

Der Erfindung liegt die Aufgabe zugrunde, bei einem Elektromotor eine möglichst kompakte und kostengünstige Kühlung zu realisieren.

Die genannte Aufgabe wird für Elektromotoren, insbesondere für Elektromotoren für Robotern, dadurch gelöst, dass in dem Gehäuse eine Ansaugöffnung derart zwischen dem ersten Lagerschild und der ersten Wickelkopfseite des Stators angeordnet ist, dass ein Kühlmedium von außerhalb des Gehäuses aufgrund des Unterdrucks an der ersten Wickelkopfseite vorbei in einen Luftspalt zwischen dem Stator und dem Rotor strömt, weiterhin ist in dem Gehäuse eine Auslassöffnung derart angeordnet, dass das Kühlmedium aus dem Luftspalt heraus an der zweiten Wickelkopfseite vorbei aus dem Gehäuse ausströmt. Das Laufrad erzeugt demnach auf der zweiten Wickelkopfseite einen Unterdruck und auf der Seite zur Auslassöffnung einen Überdruck, so dass das Kühlmedium durch den Luftspalt gezogen wird.

Mit einer derartigen Motoranordnung bzw. mit einem derartigen Elektromotor hat man einen Elektromotor mit einer Eigendurchzugskühlung geschaffen. Ist das Kühlmedium die Umgebungsluft, so erfolgt eine Lufteinleitung durch den Unterdruck, welcher beispielsweise mit einem Schleuderlüfter erzeugt wird und gezielt im Bereich der Welle den Unterdruck erzeugt und somit die Luft durch den Luftspalt des Elektromotors gezogen wird.

Eine Weiterentwicklung des Elektromotors sieht vor, den Stator mit der Wicklung gekapselt auszuführen. Insbesondere bei Robotormotoren, welche in rauen Umgebungsbedingungen arbeiten, ist ein Schutz der elektrischen Bauteile innerhalb des Motors und der Permanentmagnete vor Schmutz und Feuchtigkeit wichtig. Da nun erfindungsgemäß unter hohen Druck, d.h. auch mit einer hohen Strömungsgeschwindigkeit, ein Kühlmedium durch den Luftspalt des Motors gezogen wird, könnten Verschmutzungen innerhalb des Luftspaltes fatale Folgen haben. Beispielsweise kann man bei einem 600 Volt Elektromotor nicht so einfach eine Durchzugsbelüftung realisieren, weil dort die Luft- und Kriechstrecken für Ströme und Spannungen eingehalten werden müssen. Dementsprechend wird zum Schutz, beispielsweise der Stator, gekapselt oder mit Gießharz vergossen.

Als besonders vorteilhaft im Hinblick auf eine platzsparende Bauweise hat sich herausgestellt, bei einem Elektromotor mit einer Haltebremse, dass Unterdruck erzeugende Laufrad in die Bremsscheibe der Haltebremse zu integrieren.

Ist ein Lüfterrad vorzugsweise mit der Bremsscheibe verbunden oder in ihr integriert, wird damit kein zusätzlicher Bauraum benötigt und als weiterer Vorteil wird die Bremse zusätzlich gekühlt.

Bei dieser Ausgestaltung liegen weitere Vorteile darin, dass neben der elektrischen Verlustleistung auch die Bremsenergie abgeführt wird. In der Regel sitzt die Bremse in axialer Richtung neben dem Motoraktivteil. Auf der Bremsseite wird dann die Luft ausgeleitet und auf der gegenüberliegenden Seite wird die Luft eingesaugt.

Von weiterem Vorteil ist es, wenn der Elektromotor zusätzlich einen Umrichter aufweist, wobei der Umrichter dann zwischen dem ersten Lagerschild und der ersten Wickelkopfseite angeordnet ist.

Bei dieser Ausgestaltung ist es von zusätzlichem Vorteil, wenn zwischen dem Umrichter und der ersten Wickelkopfseite ein zusätzliches Lüfterrad auf der Welle angeordnet ist.

Bei rauen Industriebedingungen kann zusätzlich in der Ansaugöffnung ein Filterelement angeordnet sein.

Die eingangs genannte Aufgabe wird ebenso durch einen Roboter mit Elektromotor nach einem der vorangegangenen Ansprüche gelöst, umfassend ein Robotergehäuse, welches zumindest eine Einströmöffnung und eine Ausströmöffnung aufweist, wobei die Einströmöffnung mit der Ansaugöffnung in Verbindung steht und die Ausströmöffnung mit der Ausblasöffnung in Verbindung steht.

Die Erfindung kann insbesondere auf eine permanenterregte Synchronmaschine angewendet werden. Es wird dementsprechend als Unterdruck erzeugendes Laufrad ein Lüfterrad verwendet, welches auf der Motorwelle sitzt, und beim Betrieb Luft in den Motor zieht. Bei Einbaumotoren (umfassend Umrichter, Motor, Bremse und Getriebe) wird dann die Luft über den Motor durch das Gehäuse gezogen. Für eine besonders platzsparende Bauweise ist ein Lüfterrad mit der Bremsscheibe einer Haltebremse kombiniert.

Nun hat man eine Möglichkeit geschaffen, in einer kompakten Bauweise eines Elektromotors Abwärme abzutransportieren und insbesondere für den Einsatz in einem Roboter bewegte Massen klein zu halten. Somit wird die Realisierung eines "Leichtbau-Roboters" möglich. Zusätzlich hat man den Vorteil, wenn man auf diese Art und Weise eine Eigendurchzugsbelüftung in einem Elektromotor realisiert, erreicht man eine 20 bis 30%-ige Leistungssteigerung, da die Luft durch den Motor gezogen wird.

Der Vorteil, dass der Elektromotor leichter und kleiner gebaut werden kann, erhöht gleichzeitig eine Steifigkeit des Elektromotors und somit des ganzen Roboters. Das führt zu einem geringerem Schwingverhalten und zu geringeren Geräuschen.

Die Zeichnung zeigt ein Ausführungsbeispiel. Dabei zeigt die
- FIG 1: einen Elektromotor als Synchronmaschine in einer Schnittdarstellung,
- FIG 2: den Elektromotor aus FIG 1 mit einer Haltebremse und
- FIG 3: einen erfindungsgemäßen Elektromotor innerhalb eines Gehäuses eines Roboters.

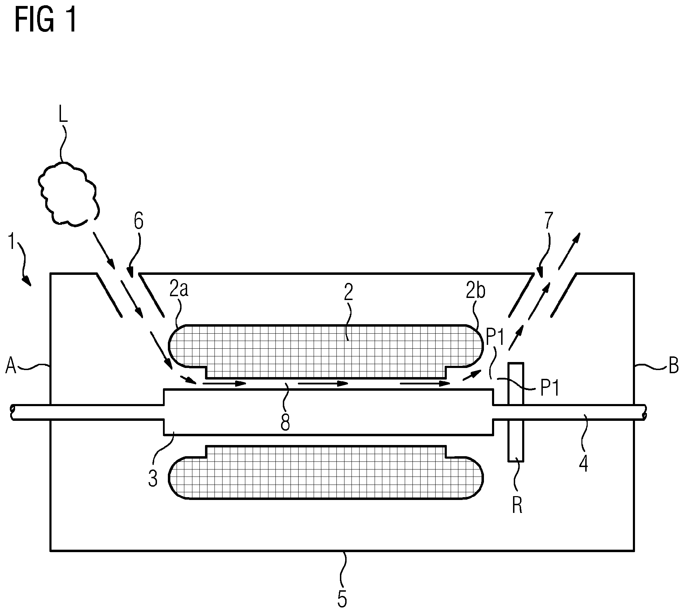

Gemäß FIG 1 ist ein Elektromotor 1 dargestellt, umfassend einen Stator 2 mit Wicklungen, welche eine erste Wickelkopfseite 2a und eine zweite Wickelkopfseite 2b umfassen. Der Elektromotor 1 ist schematisch in einer Schnittdarstellung abgebildet. Ein Rotor 3 ist mit einer Welle 4 verbunden. Ein Gehäuse 5 ist derart ausgestaltet, dass das Gehäuse ein erstes Lagerschild A und ein zweites Lagerschild B aufweist. Innerhalb des Gehäuses 5 ist axial zur Welle ein Unterdruck erzeugendes Laufrad R angeordnet. Das Laufrad R kann beispielsweise als ein Lüfterrad oder als ein Schleuderlüfter oder als ein Verdichterelement ausgestaltet sein.

In dem Gehäuse 5 ist eine Ansaugöffnung 6 derart zwischen dem ersten Lagerschild A und der ersten Wickelkopfseite 2a des Stators 2 angeordnet, dass ein Kühlmedium L von außerhalb des Gehäuses 5 aufgrund des Unterdruckes P1 an der ersten Wickelkopfseite 2a vorbei in einen Luftspalt 8 zwischen dem Stator 2 und dem Rotor 3 strömt. Damit das eingezogene Kühlmedium L die Wärme aufnehmen kann und den Elektromotor 1 wieder verlassen kann, ist eine Ausblasöffnung 7 derart angeordnet, dass das Kühlmedium L aus dem Luftspalt 8 heraus, an der zweiten Wickelkopfseite 2b vorbei, in welcher Nähe auch das Laufrad R angeordnet ist, wieder aus dem Gehäuse 5 ausströmen kann.

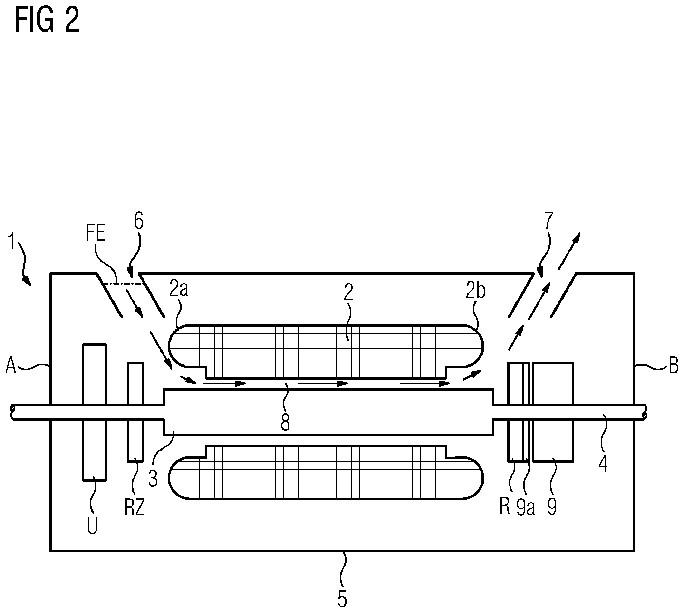

Gemäß FIG 2 ist eine Anordnung eines Elektromotors 1 mit einer Haltebremse 9 dargestellt. Integriert man das Laufrad R in eine Bremsscheibe 9a der Haltebremse 9, so erreicht man eine besonders kompakte und platzsparende Bauweise und kann trotzdem den Elektromotor 1 kühlen. Von der Ansaugöffnung 6 zeigen symbolisch die Pfeile den Luftstrom zur Ausblasöffnung 7 an. Insbesondere wenn das Laufrad R an der Stelle der zweiten Wickelkopfseite 2b angeordnet ist, kann ein kühlender Luftstrom komplett durch den Motor gesaugt werden.

Eine weitere Optimierung wird erreicht, wenn unterhalb der Ansaugöffnung 6 oder in der Nähe der Ansaugöffnung 6, ein zusätzliches Unterdruck erzeugendes Laufrad R_{z} angeordnet ist. Für den Fall, dass in der Nähe des ersten Lagerschildes A zusätzlich ein Umrichter U verbaut ist, kann dieser mit gekühlt werden.

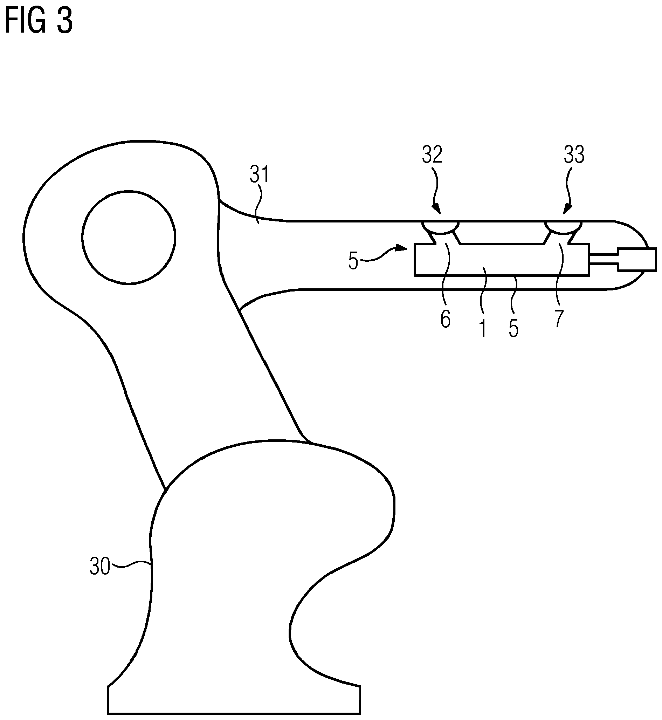

Insbesondere im Hinblick auf eine leichtbauweise für einen Roboter 30 zeigt die FIG 3 den Einsatz des erfindungsgemäßen Elektromotors 1 innerhalb eines Robotorgehäuses 31. Der Robotor 30 mit seinem eingebauten Elektromotor 1 besitzt vorzugsweise in der Nähe des Elektromotors 1 eine Einströmöffnung 32 und eine Ausströmöffnung 33 innerhalb seines Robotergehäuses 31. Die Einströmöffnung 32 des Robotergehäuses 31 steht mit der Ansaugöffnung 6 des Elektromotors 1 in Verbindung und die Ausströmöffnung 33 innerhalb des Robotergehäuses 31 steht mit der Ausblasöffnung 7 in Verbindung.

## Patentansprüche

1. Elektromotor (1), umfassend
einen Stator (2) mit Wicklungen, welche eine erste Wickelkopfseite (2a) und eine zweite Wickelkopfseite (2b) umfassen, einen Rotor (3) mit einer Welle (4),
ein ein erstes Lagerschild (A) und ein zweites Lagerschild (B) aufweisendes Gehäuse (5),
ein im Inneren des Gehäuses (5) axial zur Welle (4) angeordnetes Laufrad (R), welches ausgestaltet ist einen Unterdruck (P1) zu erzeugen,
**dadurch gekennzeichnet, dass**
in dem Gehäuse (5) eine Ansaugöffnung (6) derart zwischen dem ersten Lagerschild (A) und der ersten Kühlkopfseite (2a) des Stators (2) angeordnet ist, dass ein Kühlmedium (L) von außerhalb des Gehäuses (5) aufgrund des Unterdrucks (P1) an der ersten Wickelkopfseite (2a) vorbei in einen Luftspalt (8) zwischen dem Stator (2) und dem Rotor (3) strömt, weiterhin ist in dem Gehäuse (5) eine Ausblasöffnung (7) derart angeordnet, dass das Kühlmedium (L) aus dem Luftspalt (8) heraus an der zweiten Wickelkopfseite (2b) vorbei aus dem Gehäuse (5) ausströmt.

2. Elektromotor (1) nach Anspruch 1, wobei der Stator (2) mit der Wicklung gekapselt ist.

3. Elektromotor (1) nach Anspruch 1 oder 2, aufweisend eine Haltebremse (9), wobei eine Bremsscheibe (9a) der Haltebremse (9) das Unterdruck erzeugende Laufrad (R) umfasst.

4. Elektromotor (1) nach einem der Ansprüche 1 bis 3 zusätzlich aufweisend einen Umrichter (U), wobei der Umrichter (U) zwischen dem ersten Lagerschild (A) und der ersten Wickelkopfseite (2a) angeordnet ist.

5. Elektromotor (1) nach Anspruch 4, wobei zwischen dem Umrichter (U) und der ersten Wickelkopfseite (2a) ein zusätzliches Lüfterrad (R_{z}) auf der Welle (4) angeordnet ist.

6. Elektromotor (1) nach einem der Ansprüche 1 bis 5, wobei vor oder in der Ansaugöffnung (6) ein Filterelement (FE) angeordnet ist.

7. Roboter (30) mit einem Elektromotor (1) nach einem der Ansprüche 1 bis 4, umfassend ein Robotergehäuse (31), welches zumindest eine Einströmöffnung (32) und eine Ausströmöffnung (33) aufweist, wobei die Einströmöffnung (32) mit der Ansaugöffnung (6) in Verbindung steht und die Ausströmöffnung (33) mit der Ausblasöffnung (7) in Verbindung steht.
